Europäisches Patentamt

**European Patent Office**

Office européen des brevets

(19)

(11) Publication number: **0 006 588**
A1

# EUROPEAN PATENT APPLICATION

(12)

(21) Application number: **79102067.0**

(22) Date of filing: **22.06.79**

(51) Int. Cl.³: **A 01 D 87/00,** A 01 D 87/08, B 66 F 9/19, E 02 F 3/80

(30) Priority: **30.06.78 GB 2851678**

(43) Date of publication of application: **09.01.80**
**Bulletin 80/1**

(84) Designated Contracting States: **AT BE DE FR IT NL SE**

(71) Applicant: **A.C. Bamlett Limited, Station Road, Thirsk, North Yorkshire YO7 1QA (GB)**

(72) Inventor: **Knight, William Horace, Mill Lane Barn Great Thirkleby, Thirsk North Yorkshire (GB)**

(74) Representative: **Jack, Bruce James et al, FORRESTER & BOEHMERT Widenmayerstrasse 5/IV, D-8000 Munchen 22 (DE)**

(54) **Improvements in or relating to a buckrake.**

(57) A buckrake comprises a support having a plurality of tines (3) extending therefrom to support silage or like materials, the support being provided with connecting means (1) whereby the buckrake may be attached to a tractor. A push-off gate (4) is provided which may be moved transverse to the tines (3) to push material supported by the tines (3) off as and when desired. This push-off gate (4) is moved by means of a generally horizontally disposed hydraulically actuated scissor action push mechanism (5). The scissor action push mechanism (5) is disposed between the tractor connecting means (1) and the gate (4) and at no time during the movement of the gate (4) does any part of the push mechanism (5) protrude beyond the tractor connecting means (1).

EP 0 006 588 A1

DESCRIPTION OF INVENTION

IMPROVEMENTS IN OR RELATING TO A BUCKRAKE

THIS INVENTION relates to a buckrake and more particularly to a push-off buckrake.

Buckrakes attached to tractors are commonly used for transporting silage and the like. Presently proposed buckrakes generally comprise a series of horizontally extending tines arranged to support the silage or like material and in the case of push-off buckrakes a gate is provided which is normally located in a retracted position at the rear of the tines. The push-off gate may, however, be actuated when desired to push off the material supported on the tines, the push-off gate then moving from the retracted position across the tines.

In previously proposed types of push-off buckrakes provided with such gates, the mechanism for pushing the gate forward has been of a relatively complex design requiring numerous lever arms and springs. Furthermore, in order to retract the gate to a suitable position to allow full utilisation of the tines it has been necessary to mount the various parts of the gate moving mechanism in such a way that when the gate is in its retracted position they protrude beyond the parts of the buckrake designed to engage a standard three point tractor linkage. This is of course very inconvenient.

Furthermore, it has been found with previously proposed buckrakes that the load is located a considerable distance from the tractor, and thus there is a tendency for the tractor to tip if large loads are carried.

Another problem encountered with prior proposed push-off buckrakes having a rearwardly protruding gate mechanism is the tendency for parts of the mechanism to foul or snag

on, for example, the tractor cab or mud guards, or in the case in which a hydraulic actuating device is used for the gate mechanism, the hydraulic fluid hoses.

This invention seeks to provide an improved push-off buckrake in which the above described disadvantages of prior buckrakes are reduced or obviated.

According to this invention there is provided a push-off buckrake comprising a support portion which includes means for connecting the buckrake to a tractor or the like and support means having a plurality of tines, extending therefrom, gate means arranged for movement from a position adjacent said support portion towards the fee ends of the tines to push material supported by said tines of said buckrake, and a pushing mechanism for moving said gate means, said pushing mechanism comprising a pair of arms mounted for pivotal movement relative to one another, one end of each arm being provided with means co-operating with said support portion and the other end of each arm being provided with means co-operating with said gate means, and actuation means for moving said arms pivotally thereby to cause movement of said gate means towards or away from the free ends of the tines.

Preferably said pair of arms intersect and are pivotally connected substantially at their point of intersection. Advantageously said one end of one of said arms is provided with pivotal attachment means connected to said support portion and said one end of the other arm is provided with slider means which locates in a channel provided on said support portion, the arrangement being such that on relative pivotal movement between said arms said one end of said one arm merely pivots about said pivotal attachment means whilst said one end of the other arm moves towards or away from said one end of said one arm, said slider means moving backwards and forwards along said channel. Conveniently the other end of the other arm is provided with pivoting means by means of which the arm is pivotally mounted to the gate means, and the other end of said one arm is provided with slider means which locate in a channel arrangement provided on said gate means, the arrangement being such, that on relative pivotal movement between said arms said other end of said other arm pivots about said pivoting means whilst said other end of said one arm moves towards or away from said other end of said other arm, the slider means of said one arm moving backwards and forwards along said channel arrangement on said gate means.

Preferably said actuation means comprises a hydraulic cylinder and piston and conveniently one end of each arm is provided with a shoulder portion, said hydraulic cylinder being pivotally mounted to one shoulder portion and the piston being pivotally mounted to the other shoulder portion. Advantageously said arms are formed from elongate box sectioned girders.

Advantageously said gate means is provided along its lower edge with rollers adapted to run along said tines.

Conveniently the free ends of the tines are flattened but are provided with longitudinally extending reinforcing ribs. Preferably the support means supporting said tines comprises a box sectioned girder provided with a series of equally spaced mounting apertures adapted to receive end portions of the tines. Conveniently said gate means is provided with a base portion the lower edge of which lies adajcent said tines thereby to ensure efficient pushing off of material supported by said tines.

In order that the invention may be more readily understood and so that further features thereof may be appreciated, the invention will now be described by way of example and with reference to the accompanying drawings in which;

Figure 1 is a front perspective view of a push-off

0006588

buckrake in accordance with the invention, with the gate in a fully retracted position;

Figure 2 is a part cut away front perspective view of the buckrake of Figure 1, the gate being in an advanced position;

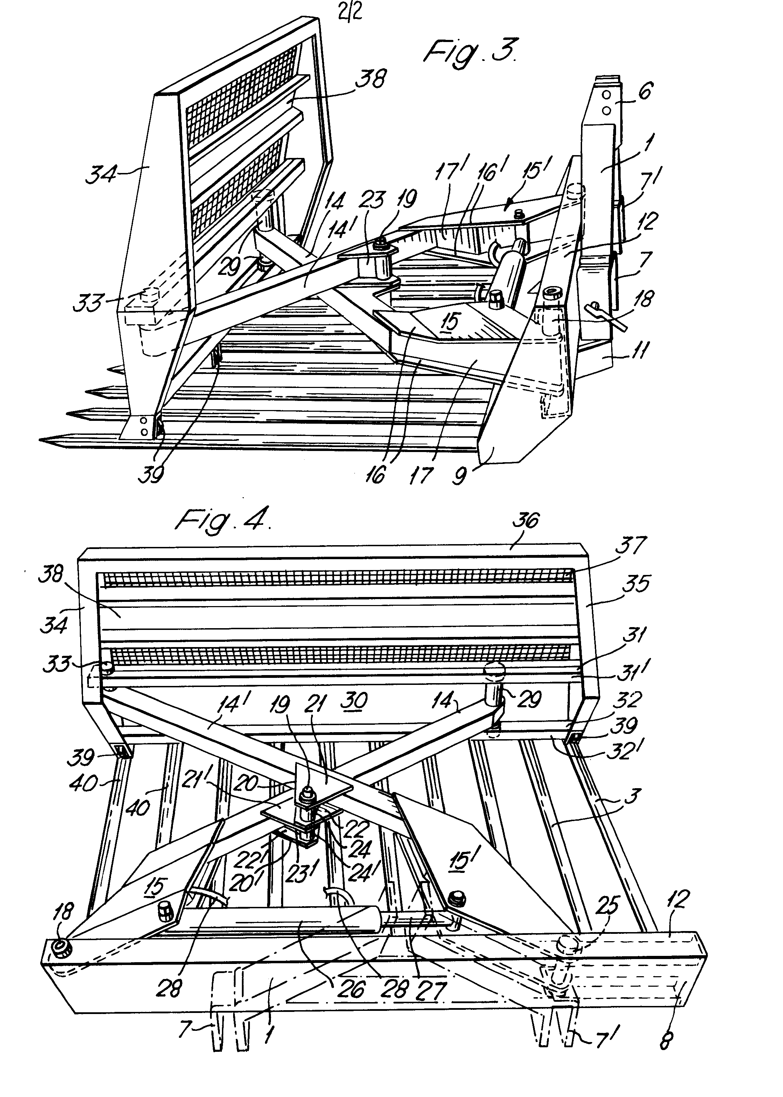

Figure 3 is a rear perspective view of the buckrake shown in Figure 2; and

Figure 4 is a top perspective view with parts cut away, of the buckrake shown in Figure 2.

Referring to the drawings, a push-off buckrake comprises an arrangement 1, described in detail hereinafter to engage a three point tractor linkage, a transverse horizontal mounting girder attached to the arrangement 1 and having ten equally spaced horizontal tines 3 extending forwardly therefrom, and a push gate 4 provided with a hydraulically actuated scissor action pushing mechanism 5 mounted between the push gate 4 and the arrangement 1.

The arrangement 1 to engage the three point tractor linkage comprises an "A" frame formed of box sectioned girders. The Apex 6 and the feet 7, 7' of the "A" frame each comprise a pair of facing parallel plates the plates each being provided with transverse bolt holes whereby a conventional three point linkage provided at the back of a tractor can be attached to the "A" frame by means of bolts, attachment pins or the like.

An elongate rectangular vertically disposed back-plate 8 is welded to the feet 7, 7' of the "A" frame. Side plates 9 are provided at each end of the back plate 8 which extend forwardly and downwardly and support therebetween the mounting girder 2 which comprises an elongate box sectioned girder provided with ten equally spaced circular apertures.10. The portions of the tines 3 mounted in the mounting girder 2 are of circular cross section and are mounted in the circular apertures 10. In addition to the side plates 9 the mounting girder 2 is provided with reinforcing supports 11 which extend rearwardly from the mounting girder and are welded to the lower part of the feet 7, 7' of the "A" frame.

An elongate forwardly extending flange 12 is provided at the top edge of the back-plate and this is in turn provided along its free edge with a second depending flange 13. In this way a downwardly opening channel extending the length of the back plate 8 is defined between the second flange 13 and the back-plate 8. A second elongate forwardly extending flange 12' is provided at the bottom edge of the backplate 8 and this is in turn provided with an upstanding flange 13'. An upwardly opening channel is thus defined.

The scissor action pushing mechanism 5 comprises two arms 14, 14' each provided at one end with a shoulder portion 15, 15' comprising two substantially horizontally arranged facing plates 16, 16'. The arms 14, 14' themselves are box sectioned members, the substantially horizontal facing plates 16, 16' of the shoulder portions 15, 15' extending respectively from an upper and a lower wall of each said arm 14, 14'. The shoulder portions 15, 15' additionally include vertical reinforcing plates 17, 17' which extend between the horizontal plates 16, 16'.

One of the arms 14 is pivotally mounted by means of a mounting pin 18 which extends upwardly from the shoulder portion 15 of the arm 14 and locates in an aperture formed at one end of the flange 12 extending from the top edge of the back-plate 8. The second arm 14' which is positioned above the first arm 14 is pivotally mounted thereon by means of a pivoting pin 19 which extends through mounting means 20, 20' provided on each of said arms 14, 14'. The mounting means 20, 20' on each arm comprises a first horizontal triangular plate 21, 21' welded by its base to the top wall of the arm 14, 14' and a second identical triangular plate 22, 22' welded by its base to the bottom wall of the arm 14, 14'. Each plate protrudes away from the arm and a rectangular web 23, 23' extending between the two plates 21, 22, 21' and 22' is provided as reinforcement. Apertures are provided adjacent the apices of the triangular plates and a tubular portion 24, 24' extends between each pair of apertures, each tubular portion 24, 24' being welded to the respective rectangular reinforcing-web 23, 23'. The pivoting pin 19 by means of which the two arms 14, 14' are pivotally mounted extends through the apertures and tubular portions 24, 24' of each mounting means 20, 20'. In this way the two arms 14, 14' are enabled to describe a scissor type action about the pivoting pin 19.

The shoulder portion 15' of the second arm is provided with slider means in the form of a pin 25 which extends through apertures and a tubular bush in the shoulder portion 15' and has mounted at each end thereof a roller which locates within one or other of the channels defined between the second flanges 13, 13' and the back plate 8. The rollers are arranged to slide backwards and forwards along the channels when the arms 14, 14' are actuated for pivotal movement relative to one another to move the gate 4 forwards or backwards.

A double acting hydraulic cylinder 26 is pivotally mounted to the shoulder portion 15 of the first arm 14 and the piston 27 of the hydraulic cylinder 26 is similarly pivotally mounted to the shoulder portion 15' of the second arm 14'. Hydraulic fluid hoses 28 communicate with the hydraulic cylinder 26 at each end thereof, the hydraulic cylinder 26 serving as an actuating device to cause the shoulder 15' of the second arm 14' to be pushed away or urged towards the shoulder portion 15 on the first arm 14 as desired.

The free end of the first arm 14 is provided with an upwardly and downwardly extending rod 29 provided at each end with rollers which locate for free sliding movement in channel means provided on the gate 4 of the buckrake. The free end of the second arm 14' is pivotally mounted to the end of the gate 4 opposite the end of the top flange 12 to which the shoulder portion 15 of the first arm 14 is pivotally attached.

Thus, in order to urge the gate 4 in a direction to push off any material supported on the tines 3 the hydraulic cylinder 26 will be actuated to retract the piston 27 into the cylinder and thus to urge the shoulder portion 15' of the second arm 14' towards the shoulder portion 15 of the first arm 14, the rollers mounted on the pin 25 sliding along the respective channels in which they locate. The two arms 14, 14' will thus be urged in a direction away from the back-plate 8 in a scissor type action. The rollers mounted on the rod 29 on the first arm 14 will slide in the channels provided towards the pivotally mounted end of the second arm 14' and the gate 4 will, as a result, move towards the ends of the tines 3.

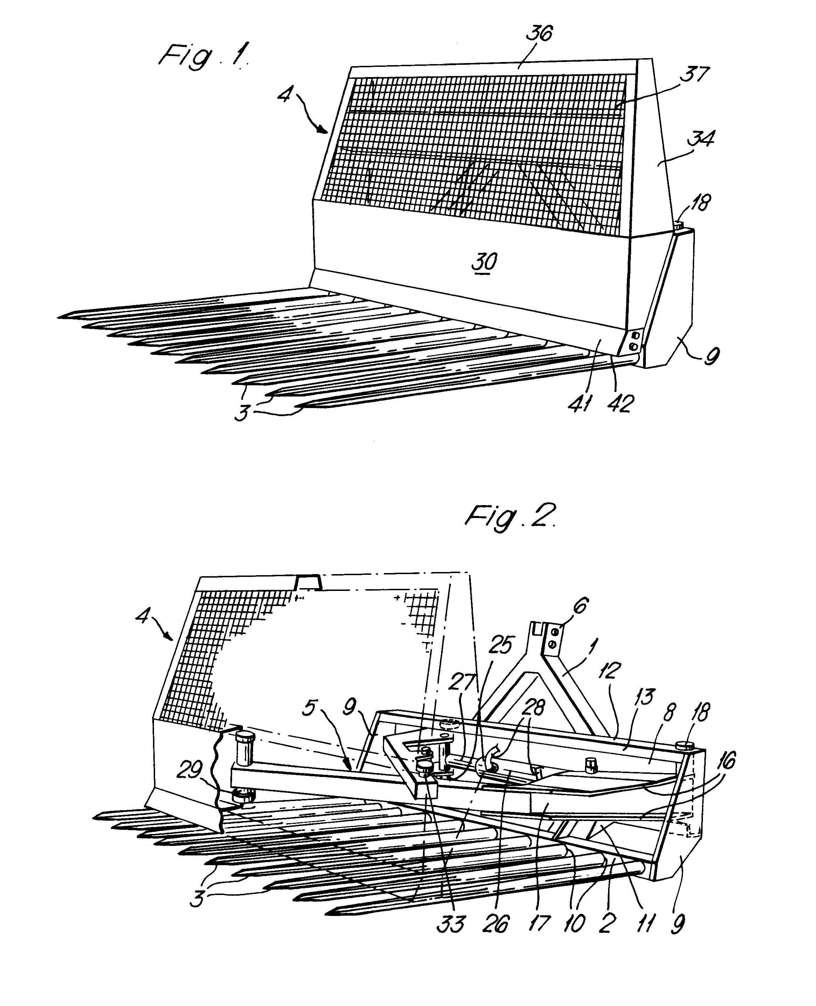

When it is desired to retract the gate 4 the hydraulic cylinder 26 is actuated to urge the piston 27 outwardly and the arms 14, 14', in consequence, pivot towards the backplate 8. Reference to Figure 1 will show the gate 4 in its fully retracted position. When the gate 4 is in this position the two arms 14, 14' will lie substantially parallel with the back plate 8 of the buckrake.

Describing the gate in more detail, there is provided an elongate vertically disposed front plate 30 having a rearwardly extending flange 31, 32 provided at both the top and bottom edges thereof. The top and bottom flanges 31, 32 are respectively provided with downwardly and upwardly extending flanges 31', 32" which respectively define downwardly and upwardly opening channels adapted to receive the rollers of the rod 29 provided at the end of the first arm 14. The top flange 31 is provided at one end with an aperture in which a pivoting pin 33 by means of which the second arm 14' is pivotally attached to the gate 4, is mounted. The gate 4 further comprises a side plate 34, 35 provided at each end of the front plate 30, each side plate extending

0006588

upwardly and therebeing an elongate reinforcing member 36 extending between the top edges of the side plates 34, 35. The side plates 34, 35 and the reinforcing member 36 are each provided with reinforcing flanges along the edges thereof. A rectangular wire grid 37 is mounted in the rectangular space framed by the top flange 31 of the front wall 30, the side plates 34, 35 and the reinforcing member 36. A further reinforcing member 38 extends between the side plates 34, 35 midway between the top reinforcing member 36 and the top flange 31 of the front plate 30. This further reinforcing member 38 rests against the wire grid 37.

Four flanges 39 are attached to the bottom flange 32 of the front plate 30 and are adapted to run along the first, fourth, seventh and tenth tines 3 thereby to support the gate 4 above the tines and to facilitate friction free movement of the gate without twisting relative to the tines. The ends of the tines 3 which are mounted are of circular cross section but the tines are flattened towards the free ends thereof. The flattened portions are provided with longitudinally extending top and bottom reinforcing ribs 40.

To ensure that all the material on the tines 3 is pushed off when the gate 4 is urged towards the free ends of the tines, a base plate 41 is provided at the bottom of the front plate 30 and as may be seen from Figures 1 and 2 the lower edge of this plate 41 lies directly adjacent the tines 3.

It will be appreciated that since the scissor action pushing mechanism 5 is located between the arrangement that engages the three point linkage and the gate 4, when the buckrake is attached to the back of a tractor no part of the buckrake extends beyond the tractor linkage. Also the scissor type mechanism is very small this enabling the tines of the buckrake to be located close to the three point linkage. As a result a relatively large load can be carried without fear of the tractor

0006588

tipping. It will also be appreciated that the simple arrangement of the pushing mechanism 5 reduces the likelihood of parts of the mechanism snaging or fouling parts of the tractor or hydraulic fluid supply hoses.

Whilst the push-off buckrake has been described as being provided with an arrangement suitable for connecting the buckrake to the three point linkage of a tractor it is envisaged that buckrakes of the type described above may be provided with different types of connecting arrangement to facilitate the connection of the buckrake, for example, to a front end loader of a tractor or to a fork lift device.

It should also be mentioned that in the event that the buckrake is intended for use with an older type of tractor provided with only a single acting hydraulic supply, the double acting hydraulic cylinder described in connection with the embodiment described above may be substituted by a single acting hydraulic cylinder provided with a piston return spring.

CLAIMS:

1. A push-off buckrake comprising a support portion which includes means for connecting the buckrake to a tractor or the like and support means having a plurality of tines extending therefrom, gate means arranged for movement from a position adjacent said support portion towards the free ends of the tines to push material supported by said tines off said buckrake, and a pushing mechanism for moving said gate means, said pushing mechanism comprising a pair of arms mounted for pivotal movement relative to one another, one end of each arm being provided with means co-operating with said support portion and the other end of each arm being provided with means co-operating with said gate means, and actuation means for moving said arms pivotally thereby to cause movement of said gate means towards or away from the free ends of the tines.

2. A push-off buckrake according to claim 1 wherein said pair of arms intersect and are pivotally connected substantially at their point of intersection.

3. A push-off buckrake according to claim 1 or 2 wherein said one end of one of said arms is provided with pivotal attachment means connected to said support portion and said one end of the other arm is provided with slider means which locates in a channel provided on said support portion, the arrangement being such that on relative pivotal movement between said arms said one end of said one arm merely pivots about said pivotal attachment means whilst said one end of the other arm moves towards or away from said one end of said one arm, said slider moving backwards and forwards along said channel

4. A push-off buckrake according to claim 3 wherein the other end of the other arm is provided with pivoting means by means of which the arm is pivotally mounted to the gate means, and the other end of said one arm is provided with slider means which locate in a channel arrangement provided on said gate means.

5. A push-off buckrake according to claim 1, 2 or 3 wherein said actuation means comprises a hydraulic cylinder and piston.

6. A push-off buckrake according to claim 5 wherein said one end of each arm is provided with a shoulder portion, said hydraulic cylinder being pivotally mounted to one shoulder portion and the piston being pivotally mounted to the other shoulder portion.

7. A push-off buckrake according to any one of the preceding claims wherein said arms are formed from elongate box sectioned girders.

8. A push-off buckrake according to any one of the preceding claims wherein said gate means is provided along its lower edge with rollers or the like adapted to run along said tines.

9. A push-off buckrake according to any of the preceding claims wherein the support means supporting said tines comprises a box sectioned girder provided with a series of equally spaced mounting apertures adapted to receive end portions of the tines.

- 12 -

0006588

10. A push-off buckrake substantially as herein described with reference to and as shown in the accompanying drawings.

11. Any novel feature or combination of features described herein.

0006588

1/2

Fig. 1.

36
37
34
4
18
30
9
41 42
3

Fig. 2.

4
6
25
1
12
27
28
13
8
18
5 9
16
29
33 26 17 10 2 11 9
3

2/2

Fig.3.

Fig.4.

## DOCUMENTS CONSIDERED TO·BE RELEVANT

| Category | Citation of document with indication, where appropriate, of relevant passages | Relevant to claim |
|---|---|---|
| X | DE – C – 1 221 146 (AHLKE) <br> * fig. 2 * <br> -- | 1,2 |
| | US – E – 28 623 (BRUDI) <br> * fig. 3 * <br> -- | 1–5 |
| A | US – A – 3 809 264 (MAYERS) <br> * fig. 4 * <br> -- | |
| A | US – A – 3 885 692 (ANDERSON, JR .) <br> * fig. 1 * <br> -- | |
| A | DE – B – 1 531 884 (CASCADE CORP.) <br> * fig. 1 * <br> -- | |
| A | US – A – 3 166 130 (A.W. MACTAVISH) <br> * fig. 1 * <br> -- | |
| A | DK – C – 86 504 (HARRY FERGUSON LTD.) <br> * fig. 1 * <br> ---- | |

**CLASSIFICATION OF THE APPLICATION (Int. Cl.3)**

A 01 D 87/00
A 01 D 87/08
B 66 F 9/19
E 02 F 3/80

**TECHNICAL FIELDS SEARCHED (Int.Cl.3)**

A 01 D 87/00
B 66 F 9/00
E 02 F 3/80

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 28-09-1979 | BITTNER |

EPO Form 1503.1 06.78